# EUROPEAN PATENT APPLICATION

(11) **EP 4 431 389 A1**
(43) Date of publication of application: **18.09.2024**
(21) Application number: 23275042.2
(22) Date of filing: 13.03.2023
(51) Int. Cl.: B64D 11/00, B64D 11/06

(54) **PASSENGER SEATING APPARATUS WITH MOVABLE DISPLAY**

(71) Applicant: B/E Aerospace, Inc., Winston-Salem, NC 27105 (US)
(72) Inventor: DOYLE, Kathryn Elizabeth, Chinnor, OX39 4PW (GB); RUIZ LARA, Oscar, Kirkland, 98033 (US)
(74) Representative: Dehns

(57) **Abstract**

A passenger seating apparatus, a passenger seating module for nesting with another passenger seating module in a forward-aft direction, a passenger seating arrangement, an aircraft comprising a passenger seating apparatus and a method of assembling a passenger seating arrangement are disclosed herein.

The passenger seating apparatus comprises a seat (120), a wall comprising a forwardfacing side and an aft-facing side, and a display (130) mounted to the aft-facing side of the wall. The display (130) is movable between a stowed configuration and a deployed configuration, and comprises a first display portion (132) and a second display portion (134). In the stowed configuration, the first display portion (132) and the second display portion (134) lie in a common plane. In the deployed configuration, the first display portion (132) and the second display portion (134) lie in different planes. The display (130) is configured to be movable between the stowed configuration and the deployed configuration by rotating at least one of the first display portion (132) and the second display portion (134) out of said common plane.

## Description

### Technical Field

The present invention relates to passenger seating apparatuses comprising a display, such as for providing in-flight entertainment. A modular passenger seating apparatus (i.e. a passenger seating module), is also contemplated herein.

### Background

Passenger seating apparatuses are often used when providing luxury, or business-class, seats on commercial passenger vehicles such as airplanes. The passenger seating apparatus will generally comprise a furniture shell that defines the outer dimensions of the passenger seating apparatus, and that surrounds the seat itself. Each passenger seating apparatus has access to a display for providing media entertainment, such as in-flight entertainment, to a passenger during their journey. The display is commonly provided on a partition wall or monument wall facing the passenger seat, rather than in the backrest of another passenger seat (as may be the case for economy seats).

The passenger seating apparatus may be its own standalone seating unit or may be a modular passenger seating apparatus, referred to herein as a passenger seating module. Passenger seating modules are often provided in a nested arrangement, such that a rear partition wall of one passenger seating module will define a front wall of the passenger seating module behind it. Accordingly, the rear partition wall of a passenger seating module is often used as the surface on which the display is provided.

The manner in which the display is mounted to the wall of the passenger seating apparatus, such as the rear partition wall of a passenger seating module, is often constrained by a need for the display to occupy a compact space, whilst also providing an acceptable level of comfort and functionality for the passenger. For example, it is desirable for the display to not encroach the space required for the passenger to access and vacate their seat. To this end, displays are usually embedded into the wall facing the passenger's seat, thereby avoiding encroaching the access space of the passenger seat behind it; or are movably attached to the partition wall, such that the passenger may move the display to a more comfortable position viewing position when in use and may stow the display when not in use.

Passenger expectations and industry competition continue to develop, and therefore improvements in the functionality and viewing comfort for displays of passenger seats may be desired.

### Summary

Viewed from a first aspect, there is provided a passenger seating apparatus. The passenger seating apparatus comprises: a seat; a wall comprising a forward-facing side and an aft-facing side; and a display mounted to the aft-facing side of the wall, wherein the display is moveable between a stowed configuration and a deployed configuration; wherein the display comprises a first display portion and a second display portion; wherein in the stowed configuration the first display portion and the second display portion lie in a common plane; wherein in the deployed configuration the first display portion and the second display portion lie in different planes; and wherein the display is configured to be movable between the stowed configuration and the deployed configuration by rotating at least one of the first display portion and the second display portion out of said common plane.

The display may comprise a single continuous display panel defining the first display portion and the second display portion; wherein the display is configured to be movable between the stowed configuration and the deployed configuration by folding the single continuous display panel.

The seat may be askew relative to the forward-aft direction.

The seat may be at an angle of between 20 and 40 degrees relative to the forward-aft direction.

In the deployed configuration, the second display portion may be configured to lie in a plane substantially perpendicular to the direction in which the seat faces.

The display may be configured to operate in an entertainment media mode in which the second display portion displays entertainment media in a full-screen view and the first display portion displays one or more auxiliary interface.

The display may be configured to, when operating in the entertainment media mode, lower a brightness of the first display portion when the second display portion is displaying entertainment media.

The display may be configured to, when operating in the entertainment media mode, interrupt entertainment media displayed on the second display portion when one or more actions associated with the first display portion occur.

The display may be configured to automatically switch from a standby mode to an operational mode when the display is moved from the stowed configuration to the deployed configuration.

The display may comprise a flexible OLED screen.

The aft-facing side of the wall may comprise a flat surface extending substantially across the wall, wherein the display is mounted to the flat surface.

The wall may comprise a surround, wherein the display is configured to be housed in the surround when in the stowed configuration.

Viewed from a second aspect, there is provided a passenger seating module for nesting with another passenger seating module in a forward-aft direction. The passenger seating module is a passenger seating apparatus according to the first aspect, wherein the wall is a rear partition wall.

Viewed from a third aspect, there is provided a passenger seating arrangement comprising a plurality of passenger seating modules according to the second aspect, wherein each passenger seating module is nested directly in front of and/or behind an adjacent passenger seating module in the forward-aft direction.

Viewed from a fourth aspect, there is provided an aircraft comprising a passenger seating apparatus according to the third aspect, a plurality of passenger seating modules according to the second aspect, or a passenger seating arrangement according to the third aspect.

Viewed from a fifth aspect, there is provided a method of assembling a passenger seating arrangement according to the third aspect, the method comprising: nesting each passenger seating module directly in front and/or behind an adjacent passenger seating module in the forward-aft direction.

### Brief description of the drawings

Certain exemplary embodiments of the invention are described below by way of example only and with reference to the accompanying drawings in which:
Figures 1A and 1B show a passenger seating module having a display in a deployed configuration and a stowed configuration in a perspective view, respectively;
Figures 2A and 2B show a display of a passenger seating module in a deployed configuration and a stowed configuration in a perspective view, respectively;
Figures 3A and 3B show a display of a passenger seating module in a deployed configuration and a stowed configuration in a perspective view, respectively; and
Figures 4A and 4B schematically illustrate a display of a passenger seating module in a stowed configuration and a deployed configuration, respectively.

### Detailed description

Embodiments of the present invention relate to passenger seating apparatuses comprising a seat and a wall comprising a forward-facing side and an aft-facing side. A display comprising a first display portion and a second display portion is mounted to the aft-facing side of the wall and is moveable between a stowed configuration and a deployed configuration. In the stowed configuration the first display portion and the second display portion lie in a common plane, and in the deployed configuration the first display portion and the second display portion lie in different planes. The display is configured to be movable between the stowed configuration and the deployed configuration by rotating at least one of the first display portion and the second display portion out of the common plane.

Having the display be movable between the stowed configuration and the deployed configuration by rotating at least one of the display portions out of the common plane enables the passenger to adjust their viewing angle of the display for a better viewing experience. Further, by providing a display movable between the stowed configuration and the deployed configuration by rotating at least one of the display portions out of the common plane may the display can be increased relative to the size of the wall on which it is mounted whilst still enabling the passenger to adjust the viewing angle of at least a portion of the display.

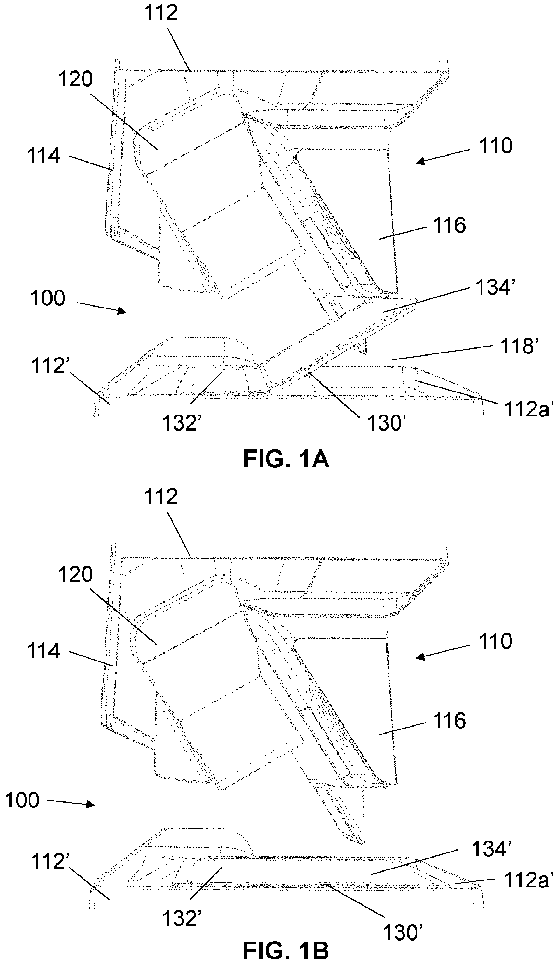

Figure 1 shows a passenger seating module 100. The passenger seating module 100 is an example of a passenger seating apparatus. The passenger seating module 100 comprises a furniture module 110 and a seat module 120. The furniture module 110 provides a shell of the passenger seating module 100 that defines the footprint, or outer dimensions, of the passenger seating module 100. The seat module 110 comprises a seat on which a passenger may rest.

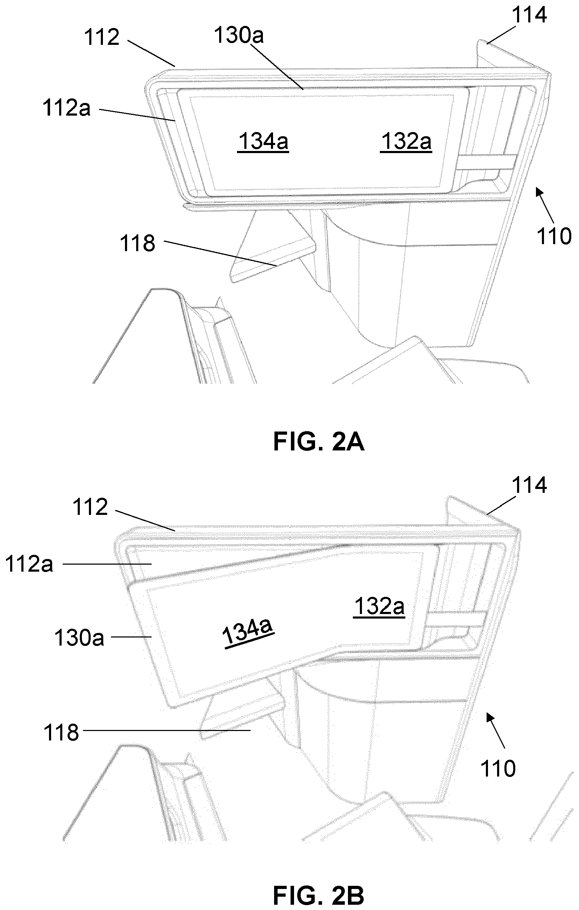

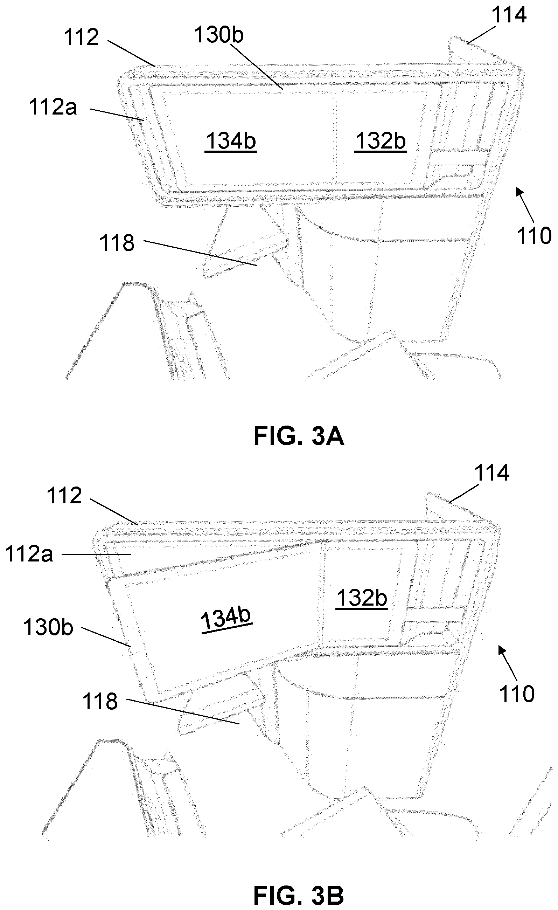

The passenger seating module 100 is suitable for nesting, i.e. configured to nest, with another passenger seating module 100 in a forward-aft direction. In other words, the passenger seating module 100 is a modular passenger seating apparatus suitable for tessellating with another modular passenger seating apparatus. In figure 1 the passenger seating module 100 is shown nested directly behind a forward-nested passenger seating module 100' in the forward-aft direction. Similarly, in figures 2 and 3 and as discussed below, the passenger seating module 100 is viewed from the perspective of another passenger seating module nested directly behind the passenger seating module 100.

The forward-aft direction in which the passenger seating module 100 may be nested is often parallel to a forward-aft direction of a vehicle in which the passenger seating module 100 is located, when in use. However, in other arrangements the forward-aft direction in which the passenger seating module 100 may be askew, or not parallel, to the forward-aft-direction of the vehicle in which the passenger seating module 100 is located.

The furniture module 110 comprises a number of features and furnishings for improving the comfort and functionality of the passenger seating module 100. The furnishings of the furniture module 110 may be separate components that are subsequently assembled, or may be contiguous aspects of a common structure, or may be combinations thereof. The furniture module 110 generally comprises a rear partition wall 112, a side partition wall 114 and a console 116. The furniture module 110 may also comprise internal or hidden routing for any electrical cables or wires of electrical components provided as part of the passenger seating module 100.

The rear partition wall 112 comprises a forward-facing side and the aft-facing side. A display 130 is mounted on an aft-facing side of the rear partition wall 112.

The forward-facing side faces into the volume of the passenger seating module 100, and thus faces in the forward direction of the forward-aft direction in which the passenger seating module 100 may be nested, which may be a generally forward direction of a passenger in the seat. The aft-facing side away into the volume of the passenger seating module 100, and thus faces in an aftward direction of the forward-aft direction in which the passenger seating module 100 may be nested, which may be a generally rearward direction of the passenger in the seat. Typically, passenger seating modules 100 will be nested such that the forward direction of the passenger seating passenger seating modules 100 corresponds to the forward direction of travel of the vehicle. However, it will be appreciated that the terms forward-facing and aft-facing merely distinguish the two opposing faces of the rear partition wall 112 and do not limit the orientation of the passenger seating module 100 relative to a direction of travel.

In use, a plurality of passenger seating modules 100 are nested together, or arranged one after the other in a uniform manner, in the forward-aft direction. As a result, the rear partition wall 112' of the forward-nested passenger seating module 100' forms the front-side wall of the passenger seating module 100 located directly behind. Thus, in use, the passenger in the seat of the passenger seating module 100 will have access to a display 130' located on the aft-facing wall of the rear partition wall 112' of the forward-nested passenger seating module 100' located in front of the passenger's own passenger seating module 100, rather than the display 130 of the passenger's own passenger seating module 100.

The side partition wall 114 is oriented substantially perpendicular to the rear partition wall 112, and may serve as a dividing partition between the interior space of the passenger seating module 100 and any adjacent passenger seating modules, or an aisle of a vehicle in which the passenger seating module 100 is situated. The side partition wall 114 may comprise an access door (not shown), such as a sliding door, or one which moves in a plane parallel with the side partition wall 114.

The console 116 is located opposite the side partition wall 114, and may provide one or more storage features for the passenger, such as a deployable tray table, or a surface on which the passenger may place one or more items, or the like. The console 116 may also house one or more electronic controls for requesting cabin assistance or controlling environmental aspects of the passenger seating module 100.

The console 116 may define an internal space or cavity accessible from the rear partition wall 112. The internal space or cavity forms a footwell 118 for the passenger seat of an aft-nested passenger seating module, i.e. a passenger seating module located directly behind the passenger seating module 100 in the forward-aft direction. Similarly, the rear partition wall 112' of a forward-nested passenger seating module 100' located in front of the passenger seating module 100 defines a usable footwell 118' for the passenger seating module 100.

The furniture module 110 also defines a recess in which the seat module 120 can be received. A number of the features and furnishings described above may at least partially define the recess in which the seat module 120 is received. For example, each of the rear partition wall 112, the side partition wall 114 and the console 116 may at least partially define the recess.

In the illustrated example, the seat module 120 is received at an angle relative to the forward-aft direction of the furniture module 110, i.e. askew to the direction in which the furniture module 110 (or the passenger seating module 100 as a whole) is oriented. The angle may be defined between the direction in which the seat module 120 is oriented and the direction in which the furniture module 110 is oriented.

The direction in which the seat module 120 is considered to be oriented is the direction that the seat of the seat module 120 faces, i.e. the direction a passenger will face during normal use of the seat module 120 or a direction normal to a backrest of the seat when in an upright position.

In the present embodiment, the seat module 120 is oriented at an angle of about 30 degrees. In other embodiments, this angle may be: between 15 and 45 degrees; between 20 and 40 degrees; or between 25 and 35 degrees. Where the seat module 120 is oriented at any of the aforementioned angles, the seat module 120 is regarded as being in as a herringbone seating configuration.

Accordingly, in the present embodiment the seat module 120 is configured to be received in a herringbone configuration. The illustrated herringbone configuration is located 30 degrees to the forward-aft direction, although other angles as described above are contemplated. Other seating configurations are also contemplated in other exemplary embodiments, as will be described later.

The seat of the seat module 120 may be operable to move between an upright configuration and a reclined configuration. In the reclined configuration, the seat may extend into the footwell 118' defined by the forward-nested passenger seating module 100' located directly in front of the passenger seating module 100. In the reclined configuration, the seat may have a substantially horizontal position. The seat module 120 may accordingly comprise a lie-flat seat, and/or be regarded as a lie-flat seat module 120. The seat may generally comprise a seat portion, a backrest portion and a headrest portion.

As mentioned above, the described passenger seat module 100 (hereafter referred to as the first passenger seat module 100) is provided with a display 130. The display 130 of the first passenger seating module 100 will form the usable display of an aft-nested passenger seating module located behind the first passenger seating module 100. The display 130' of the forward-nested passenger seating module 100' located in front of the first passenger seating module 100 will form the usable display of the first passenger seating module 100. Each of the displays 130, 130' will function in a similar manner, and thus will be understood to share common functionality and design. Where the functionality of a single display is described, it will be readily understood that this description will apply to every display where appropriate.

Referring now to the display 130' of the forward-nested passenger seating module 100' located in front of the first passenger seating module 100, the display 130' is movable between a stowed configuration (as illustrated in figure 1B) and a deployed configuration (as illustrated in figure 1A). In the stowed configuration, the display 130' lies in a plane parallel to the rear partition wall 112' (said plane typically being perpendicular to the forward-aft direction). Having the display 130' be capable of being stowed in this manner may improve the usable volume of the first passenger seating module 100 when the display 130' is not in use.

In the illustrated embodiment, the display 130' is set into a surround 112a' (i.e. a recess in which the display 130' may be encased), of the rear partition wall 112', such that in the stowed configuration the display 130' lies flush to the rear partition wall 112' (i.e. the display 130' and the rear partition wall 112' lie in a common plane). In other embodiments, the display 130' may lie in a plane parallel to the rear partition wall 112' yet offset, or adjacent, to the rear partition wall 112' such that the display 130' protrudes from the rear partition wall 112'.

The display 130' comprises a first display portion 132' and a second display portion 134'. Each of the first and second display portions 132', 134' define usable portions of the screen or display area of the display 130'. The display 130' is movable from the stowed configuration to the deployed configuration by rotating a portion of the display 130' (such as the second display portion 134', as illustrated in figure 1A) out of the plane parallel to the rear partition wall 112'. That is, only a portion of the display 130' is rotated out of the plane in which it lies when in the stowed configuration.

By providing a portion 134' of the display 130' capable of rotating out of the plane in which the display 130' is stowed, a passenger of the passenger seating module 100 located behind the display 130' may position the display 130' in a better configuration for viewing. That is, such a configuration enables a passenger to adjust their viewing angle of the screen for a better viewing experience.

Further, by providing a display 130' that comprises a second display portion 134' rotatable relative to the first display portion 132', the overall screen size, or the usable area, of the display 130' can be increased relative to the size of the rear partition wall 112' whilst still enabling the passenger to adjust the viewing angle of at least a portion of the display 130'.

As illustrated in figure 1B, in the deployed configuration the second display portion 134' is configured to face in a direction coincident with, or parallel to, the direction of seat module 120. In other words, in the deployed configuration the second display portion 134' is configured to lie substantially perpendicular to the direction of the seat of the seat module 120 (e.g. within 10 degrees, or within 5 degrees). In this manner, the viewing angle of the second display portion 134' may be thus optimised for the passenger. The second display portion 134' may be restricted from rotating further than this position, and/or may be releasably locked in this position as part of the deployed configuration.

The axis of rotation of the second display portion 134' may be a vertical axis, such that the display 130' is configured to rotate in a horizontal plane. The axis of rotation may define a location at which the first display portion 132' abuts the second display portion 134'. In other words, the display 130' is configured to move between the stowed configuration and the deployed configuration by rotating one of the first display portion 132' and the second display portion 134' towards the other.

The rear partition wall 112', or at least the aft-facing side thereof, of the present embodiment is substantially flat across its width to better facilitate mounting of the display 130' thereon. In other words, the rear partition wall 112', or at least the aft-facing side thereof, may comprise a substantially flat surface across its width, or may comprise a substantially flat footprint, to better facilitate mounting of the display 130' thereon. Providing a flat surface to which the display 130's is mounted, rather than one comprising a protrusion or rounded shape or the like, may maximise the available space on which the display 130' can be mounted and thus enable larger displays 130' to be utilised.

The flat surface is set into the rear partition wall 112' such that, when in the stowed configuration, a screen (or a bezel thereof) of the display 130' is flush with the aft-facing side of the rear partition wall 112'. However, in other embodiments the flat surface may be coplanar with the aft-facing side of the rear partition wall 112', such that a back of the display 130' is flush to the aft-facing side of the rear partition wall 112' or such that the screen (or a bezel thereof) of the display 130' at least partially protrudes from the rear partition wall 112' when stowed.

In the present embodiment, the flat surface comprises approximately 75% of the width of the rear partition wall 112'. In other embodiments it may be substantially flat across at least 60% of its width; across a least 65% of its width; across at least 70% of its width; or across at least 75% of its width. Similarly, the display 130' may extend across at least 60%; across at least 65%; across at least 70%; or across at least 75%, of the width of the rear partition wall 112'.

In the present embodiment, and as is shown in figure 1A, the first display portion 132' remains in the common parallel plane in the deployed configuration. That is, the first display portion 132' does not move relative to the passenger seating module 100'. The display 130' may thus be anchored to the rear partition wall 112' via the first display portion 132' using any suitable fastening or fixing. In other embodiments, however, the first display portion 132' may be capable of moving relative to the passenger seating module 100' and display 130' instead fixed to the rear partition wall 112' via the second display portion 134'.

In some embodiments, the display 130' in its entirety may be movable relative to the rear partition wall 112'. For example, the display 130' may be configured to be laterally and/or longitudinally displaced as it is moved from the stowed configuration. A display portion of the display 130' may remain in a plane parallel to the rear partition wall 112', such as the first display portion 132'. The other display portion, such as the second display portion 134', however, may then be rotated out of the plane of the other display portion, such that the viewing angle of this display portion is optimised. Such an arrangement may enable the passenger to adjust both the height, distance, and viewing angle, of the display 130'.

The first display portion 132' and the second display portion 134' together form an extended display. That is, each of the first display portion 132' and the second display portion 134' form separate portions of a single display, such that the usable space of the display 130' is maximised. This may be achieved in various ways, as now described below.

Figures 2A and 2B show a display 130a in a stowed configuration and a deployed configuration, respectively. The display 130a is mounted to the rear partition wall 112 of the passenger seating module 100 and comprises a first display portion 132a and a second display portion 134a. The second display portion 134a is rotatable relative to the first display portion 132a, as described above.

As shown in figures 2A and 2B, the display 130a comprises a single, continuous screen or display panel. Each of the first display portion 132a and the second display portion 134a are respective portions of the single, continuous screen or display panel. The display 130a itself is a flexible display, such that the second display portion 134a may be rotated out of the stowed configuration and into the deployed configuration. The first and second display portions 132a, 134a form the extended display by forming a single, continuous screen. The display 130a may comprise a flexible screen, such as a flexible OLED screen (e.g. an OLED display panel manufactured on a flexible foundation).

The display 130a is configured to move between the stowed configuration and the deployed configuration by folding, i.e. bending, the display 130a. That is, the second display portion 134' is configured to be rotated via the folding or bending motion about the axis of rotation. The display 130a may naturally curve at the rotation of axis defining said fold, when in the deployed configuration (i.e. instead of forming a sharp fold, or crease, in the display panel).

Figures 3A and 3B show a display 130b in a stowed configuration and a deployed configuration, respectively, in accordance with embodiments of the present invention. The display 130b is mounted to the rear partition wall 112 of the passenger seating module 100 and comprises a first display portion 132b and a second display portion 134b. The second display portion 134b is rotatable relative to the first portion 132b, as described above.

As shown in figures 3A and 3B, and in contrast to the arrangement shown in figures 2A and 2B, the display 130b comprises two separate display panels. Each display panel defines one of the first display portion 132b and the second display portion 134b. The display 130b is configured to move between the stowed configuration and the deployed configuration by rotating or folding the second display panel towards the first display panel. Whilst the first and second display portions 132a, 134b are formed of separate display panels, they are jointly operated so as to form the extended display. The two separate display panels may be placed in direct contact or immediate proximity adjacent one-another, so as to minimise or mitigate any discontinuous transition between the display areas of the first display portion 132b and the second display portion 134b.

In various arrangements, the display 130' may have one or more display functions. One or more of these functions may be benefitted by virtue of the ability of the display 130' to move between the stowed configuration and the deployed configuration. These functions are described herein.

In some embodiments, the second display portion 134' may be configured to display entertainment media in a full-screen view. The second display portion 134' may therefore be configured as a primary display portion. The first display portion 134' may then be configured to display one or more auxiliary interfaces, such as for control and playback functionality for the entertainment media, for communications information, for browsing functionality, for messaging functionality, or for other operations that do not comprise the display of entertainment media displayed on the primary display portion, to the passenger. The first display portion 134' may therefore be configured as an auxiliary display portion.

By using the second display portion 134' for the playback of entertainment media, rather than the entirety of the display 130', the entirety of the entertainment media may be displayed to the passenger at an optimised viewing angle. Further, by using the first display portion 134' for the display of auxiliary information, rather than part of the second display portion 134', the entirety of the second display portion 134' may be used for entertainment media playback such that the area of the display 130' used for entertainment media is maximised.

When in the stowed configuration, the first display portion 132' and the second display portion 134' may be configured to operate collectively in a single-screen mode. The second display portion 134' may be configured to be, or operate as, a primary display portion only when the display 130' is not in the stowed configuration (i.e. when the second display portion 134' is angled relative to the first display portion 132'). Equivalently, the first display portion 132' may be configured to be, or operate as, an auxiliary display portion only when the display 130' is not in the stowed configuration. In such arrangements, the display 130' may comprise a sensor configured to detect when the display 130' is not in the stowed configuration, such as a hall effect sensor, a magnetic switch, a mechanical contact switch or the like. Accordingly, the display area of the display 130' may be dynamically configured, or portioned, depending on the configuration, in which the display 130' is positioned by the passenger.

In other embodiments, when in the stowed configuration, the display 130' may be deactivated or placed in standby mode of operation, and the display 130' automatically switch to an operational mode of operation when moved from the stowed configuration to the deployed configuration.

The display 130' may be configured to adjust the brightness of the second display portion 134' independently of the first display portion 132'. For example, the first display portion 132' may be configured to operate with a lower brightness than the second display portion 134' when the second display portion 134' is displaying entertainment media (i.e. operating in an entertainment media playback mode). This functionality may be advantageous for arrangements wherein the second display portion 134' is configured to operate as a primary display portion (selectively or permanently). Dimming the first display portion 132' relative to the second display portion 134' may result in an optimised viewing experience for any entertainment media displayed on the second display portion 134', since the passenger may be less distracted by the lower brightness of the first display portion 132'.

The display 130' may be configured to respond to one or more actions associated with the first display portion 132'. Such actions may include interaction, e.g. receiving one or more inputs from the passenger, with the first display portion 132' or with an application displayed on the first display portion 132'. Other such actions may include notifications related to operation of messaging functionality, communication functionality, browsing functionality, or entertainment media control functionality of applications displayed on the first display portion 132'

The first display portion 132' may be configured to increase its brightness if it detects certain actions associated with the first display portion 132'. The first display portion 132' may be configured to reduce in brightness if one or more actions have not been received and/or the passenger has not interacted with the first display portion 132' within a predetermined time. The predetermined time may be: at least 10 seconds, at least 30 seconds; at least 1 minute; at least 2 minutes; at least 3 minutes; at least 5 minutes; or at least 10 minutes.

The second display portion 134' may be configured to dynamically respond to certain actions associated with the first display portion 132'. For example, the second display portion 134' may be configured to automatically pause entertainment media in response to one or more actions associated with the first display portion 132'. For example, the entertainment media may be automatically paused if the passenger receives an email marked 'important'. By automatically pausing entertainment media displaying on the second display portion 134' depending on passenger operation of the first display portion 132', the passenger's viewing experience of entertainment media on the second display portion 134' may be less disrupted, or affected, by situations where the passenger's attention might otherwise be diverted, as they will not miss part of the entertainment media whilst engaging with the first display portion 132'.

The display 130' may comprise a computer-readable storage medium, comprising one or more instructions which, when executed by a processor, cause the processor to carry out various functions of the display 130' as described above. The computer-readable storage medium and the processor may be incorporated within the display 130', or otherwise in communication therewith.

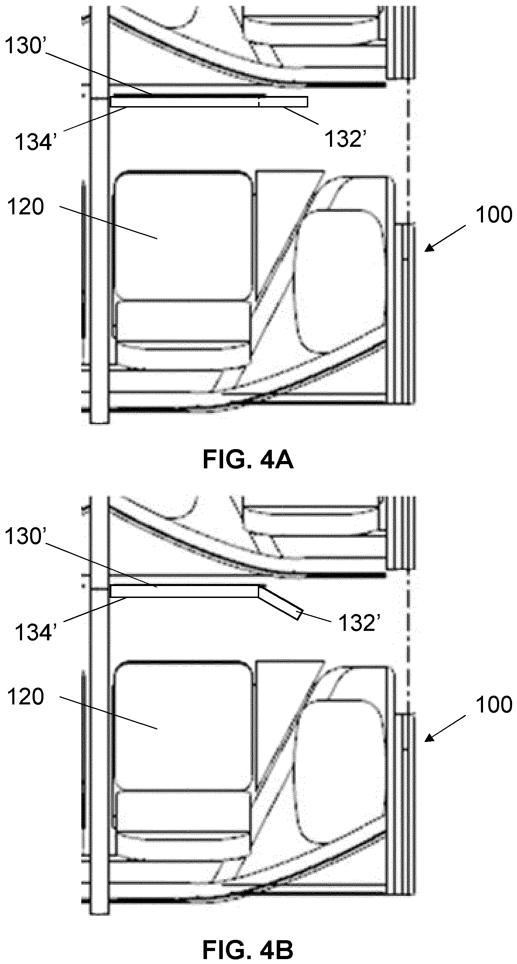

Figures 4A and 4B schematically illustrate a display 130' and a seat module 120 of an alternative passenger seating module 100. To avoid unnecessary repetition of the description of the passenger seating module 100, unless specified herein to the contrary, the passenger seating module 100 and the display 130' has a form and function as described above in relation to the preceding embodiments.

In this embodiment, the seat module 120 is received inline with the passenger seating module 100, i.e. at an angle of substantially 0 degrees relative to the direction of the furniture module 110. That is, the recess of the furniture module 110 receives the seat module 120 in a straight, or parallel manner, relative to the forward-aft direction of the passenger seating module 100. Where the seat module 120 is received at an angle of 0 degrees, the seat module 120 is regarded as being in an inline seating configuration. An angle of up to 10 degrees, or up to 5 degrees, away from the direction of the furniture module 110 may still be considered to be an inline seating configuration.

As can be seen from figure 4A, the display 130' is in the stowed configuration in which first display portion 132' and the second display portion 134' lie in a common parallel plane. The display 130' can be moved to the deployed configuration, as shown in figure 4B, by rotating the first display portion 132' out of the common parallel plane.

In an inline configuration the display 130' already faces perpendicularly to the seat module 120, such that the passenger has a perpendicular viewing angle of the display 130'. However, where a larger display 130' is used or the display 130' is offset to the passenger's line of sight, the viewing comfort of the passenger may be compromised. Accordingly, by enabling the first display portion 132' to rotate out of the plane of the second display portion 134' in the deployed configuration, the passenger's viewing angle of the first display portion 132' may be improved as desired.

As described above, the passenger modules 100 described in relation to figures 1 to 4 are examples of passenger seating apparatuses wherein the wall upon which the display 130 is mounted is a rear partition wall 112 of an adjacent passenger seating apparatus. In other embodiments, the wall upon which the display 130 is mounted may instead be a forward partition wall of the passenger seating apparatus itself or a monument wall, i.e. a wall located forward of the seat rather than aftward of the seat. In these embodiments, the display will be mounted on the aft-facing side of the wall and will thus face the seat of said apparatus, rather than form the display of a passenger seat located behind the apparatus. The passenger seating apparatus may be a standalone passenger seating apparatus (i.e. not part of a modular arrangement). Alternatively, the passenger seating apparatus may be a passenger seating apparatus located behind, and thus facing, the wall of a monument, wherein the wall of the monument will be understood to form a wall a functional furniture unit of a vehicle such as a kitchen unit, a toilet unit or a stowage unit. The display will have the form and functionality of the display 130 described above. The passenger seating apparatus may also comprise a furniture module of the form and functionality of the furniture module 110 described above, and the seat may have the form and functionality of the seat module 120 described above.

The passenger seating apparatuses of each of the above-described embodiments are aircraft cabin seats, and are accordingly passenger seating apparatuses for an aircraft. However, the passenger seating apparatuses are contemplated for any commercial passenger vehicle, including but not limited to a railroad vehicle such as a train compartment, a marine vessel such as a ferry or cruise liner, or the like.

## Claims

1. A passenger seating apparatus, comprising:
a seat (120);
a wall (112) comprising a forward-facing side and an aft-facing side; and
a display (130) mounted to the aft-facing side of the wall, wherein the display is moveable between a stowed configuration and a deployed configuration;
wherein the display (130) comprises a first display portion (132) and a second display portion (134);
wherein in the stowed configuration the first display portion (132) and the second display portion (134) lie in a common plane;
wherein in the deployed configuration the first display portion (132) and the second display portion (134) lie in different planes; and
wherein the display (130) is configured to be movable between the stowed configuration and the deployed configuration by rotating at least one of the first display portion (132) and the second display portion (134) out of said common plane.

2. A passenger seating apparatus as claimed in claim 1, wherein the display (130a) comprises a single continuous display panel defining the first display portion (132a) and the second display portion (134a); and
wherein the display (130a) is configured to be movable between the stowed configuration and the deployed configuration by folding the single continuous display panel.

3. A passenger seating apparatus as claimed in claim 1 or 2, wherein the seat (120) is askew relative to the forward-aft direction;
optionally wherein the seat (120) is at an angle of between 20 and 40 degrees relative to the forward-aft direction.

4. A passenger seating apparatus as claimed in claim 3, wherein, in the deployed configuration, the second display portion (134) is configured to lie in a plane substantially perpendicular to the direction in which the seat (120) faces.

5. A passenger seating apparatus as claimed in any preceding claim, wherein the display (130) is configured to operate in an entertainment media mode in which the second display portion (134) displays entertainment media in a full-screen view and the first display portion (132) displays one or more auxiliary interface.

6. A passenger seating apparatus as claimed in claim 5, wherein the display (130) is configured to, when operating in the entertainment media mode, lower a brightness of the first display portion (132) when the second display portion (134) is displaying entertainment media.

7. A passenger seating apparatus as claimed in claim 5 or 6, wherein the display (130) is configured to, when operating in the entertainment media mode, interrupt entertainment media displayed on the second display portion (134) when one or more actions associated with the first display portion (132) occur.

8. A passenger seating apparatus as claimed in any preceding claim, wherein the display (130) is configured to automatically switch from a standby mode to an operational mode when the display (130) is moved from the stowed configuration to the deployed configuration.

9. A passenger seating apparatus as claimed in any preceding claim, wherein the display (130) comprises a flexible OLED screen.

10. A passenger seating apparatus as claimed in any preceding claim, wherein the aft-facing side of the wall (112) comprises a flat surface extending substantially across the wall (112), and wherein the display (130) is mounted to the flat surface.

11. A passenger seating apparatus as claimed in any preceding claim, wherein the wall (112) comprises a surround (112a);
wherein the display (130) is configured to be housed in the surround (112a) when in the stowed configuration.

12. A passenger seating module (100) for nesting with another passenger seating module (100') in a forward-aft direction, wherein the passenger seating module is a passenger seating apparatus as claimed in any preceding claim; and wherein the wall is a rear partition wall (112).

13. A passenger seating arrangement comprising:
a plurality of passenger seating modules (100, 100');
wherein each passenger seating module (100, 100') is a passenger seating module as claimed in claim 12; and
wherein each passenger seating module (100, 100') is nested directly in front of and/or behind an adjacent passenger seating module in the forward-aft direction.

14. An aircraft comprising a passenger seating apparatus as claimed in any of claims 1 to 11, a plurality of passenger seating modules (100) as claimed in claim 12, or a passenger seating arrangement as claimed in claim 13.

15. A method of assembling a passenger seating arrangement as claimed in claim 13, comprising:
nesting each passenger seating module (100, 100') directly in front and/or behind an adjacent passenger seating module in the forward-aft direction.
